# FASCICULE DE BREVET EUROPEEN

(11) **EP 2 699 369 B1**
(45) Date de publication et mention de la délivrance du brevet: **12.08.2015**
(21) Numéro de dépôt: 12715975.4
(22) Date de dépôt: 18.04.2012
(51) Int. Cl.: B22F 3/105, B29C 67/00, B22F 3/23

(54) **PROCÉDÉ DE FABRICATION D'UN OBJET PAR SOLIDIFICATION D'UNE POUDRE À L'AIDE D'UN LASER**
VERFAHREN ZUR HERSTELLUNG EINES GEGENSTANDES DURCH VERFESTIGUNG EINER PULVERS MITTELS EINES LASERS
PROCESS FOR MANUFACTURING AN OBJECT BY SOLIDIFYING A POWDER USING A LASER

(30) Priorité: 19.04.2011 FR 1153365
(43) Date de publication de la demande: 26.02.2014
(73) Titulaire: Phenix Systems, 63200 Riom (FR)
(72) Inventeur: TEULET, Patrick, F-63200 Riom (FR)
(74) Mandataire: Myon, Gérard Jean-Pierre
(86) Numéro de dépôt international: PCT/EP2012/057030
(87) Numéro de publication internationale: WO 2012/143365

(56) Documents cités:
- EP-A1- 1 358 855
- WO-A2-2009/010034
- DE-A1- 10 042 132
- US-A1- 2010 202 914

## Description

L'invention a trait à un procédé de fabrication d'un objet par solidification d'une poudre à l'aide d'un laser.

Par « poudre », on désigne ici un matériau pulvérulent composé d'un ou de plusieurs éléments ainsi qu'un mélange de plusieurs matériaux pulvérulents. En d'autres termes, par « poudre » on désigne une poudre ou un mélange de poudres. Ces poudres peuvent être métalliques ou minérales, par exemple une poudre de céramique.

Il est connu de réaliser des objets, de formes plus ou moins complexes, à partir d'une poudre en solidifiant par fusion sous l'effet de l'énergie thermique fournie par un laser, certaines zones de la poudre préalablement étalée en couches minces. Par la suite, on désignera par le terme « frittage » une telle solidification par traitement à l'aide d'un laser.

Chaque couche de poudre est frittée, seulement au niveau des zones destinées à former les parois de l'objet fini, préalablement à l'étalement et au compactage d'une couche supplémentaire de poudre. Par paroi, on désigne ici une partie d'un élément constitutif d'un objet. Cet élément peut être plein, de différentes formes géométriques ou définir, au moins partiellement, un volume. Lorsque l'on souhaite réaliser par ce procédé des objets ayant au moins une paroi mince, c'est-à-dire une paroi d'épaisseur inférieure à 1 mm, ou bien des objets dont le rapport hauteur ou diamètre de l'objet sur l'épaisseur de la paroi est supérieure à cinq, ou bien encore des formes complexes avec des zones en contre dépouille, on observe des difficultés de mise en oeuvre des procédés connus.

Ces difficultés concernent le frittage de la poudre et entraînent l'apparition de défauts dans l'objet réalisé, notamment une fragilité de certaines parois de l'objet. En effet, l'utilisation d'un laser pour apporter, ponctuellement et rapidement, l'énergie nécessaire pour solidifier la zone destinée à former la paroi de l'objet induit une élévation locale de la température importante pouvant atteindre plusieurs centaines de degrés Celsius. Une telle élévation de température peut générer des contraintes résiduelles notamment lorsque ces parois sont de faible épaisseur et donc des déformations localisées des parois de l'objet.

Par ailleurs, dans les zones dites en contre-dépouille, c'est-à-dire dans les zones où la paroi de l'objet est en surplomb au dessus d'une zone de poudre non solidifiée, on observe également des déformations. En effet, lorsque le faisceau laser agit sur la poudre il se produit une élévation de température, par rayonnement, de la poudre de la zone voisine de celle en cours de frittage. Cette élévation de température est particulièrement sensible lorsque les zones voisines sont des zones situées sous celles précédemment frittées, en d'autres termes, lorsque les zones voisines de la zone à fritter sont situées dans les couches inférieures de la poudre par rapport à la couche frittée constitutive de la paroi de l'objet. Dans ces couches inférieures, la poudre est située sous une zone en surplomb de la paroi, c'est-à-dire dans une zone en contre-dépouille. Un matériau sous forme pulvérulente a une conductivité thermique inférieure à celle du même matériau solidifié, donc de densité plus forte. Ceci est dû à la présence de gaz, par exemple d'air ou d'azote, entre les grains du matériau en poudre. Cette différence de conductivité thermique permet une solidification de la poudre étalée en une couche supérieure, en cours de frittage, au dessus de la couche précédemment frittée et formant la paroi en cours de réalisation mais entraîne également une solidification de la poudre située dans la couche inférieure, sous celle frittée formant la paroi. De ce fait, il y a apparition de zones solidifiées non prévues, par exemple des pointes ou des reliefs en surépaisseur.

DE-A-100 42 132 divulgue une méthode de fabrication d'un objet par solidification d'une poudre. On dépose une première couche de poudre. Puis, on solidifie, à l'aide d'un laser, une première zone de la couche, qui correspond à une section d'une partie constitutive de l'objet fini. On solidifie également au moins une deuxième zone de la couche, cette deuxième zone étant au contact de la première zone solidifiée. Les conditions de solidification sont adaptées pour que la deuxième zone solidifiée présente une résistance mécanique inférieure à la première zone solidifiée. L'objet fini comprend ainsi une zone centrale, située au coeur de l'objet, ainsi qu'une couche de revêtement qui entoure la zone centrale. La zone centrale est partiellement solidifiée, tandis que la solidification de la couche de revêtement est totale, ce qui lui confère une grande dureté permettant l'usinage de la surface extérieure de l'objet. Cet objet se présente sous la forme d'un volume plein et ne comporte donc pas de parois minces. Par conséquent, les difficultés de mise en oeuvre des procédés de frittage connus ne sont pas présentes.

L'invention propose de remédier auxinconvénients évoqués plus haut avec un procédé permettant de réaliser des objets à paroi mince et/ou de forme complexe et/ou à volume important, ne présentant pas de défaut structurel.

A cet effet, l'invention a pour objet un procédé de fabrication d'un objet par solidification d'une poudre ou d'un mélange de poudres, tel que défini à la revendication 1.

On réalise ainsi une deuxième zone solidifiée mais de moindre résistance, autour de la zone formant une section d'une partie constitutive de l'objet. Cette deuxième zone solidifiée est suffisamment résistante pour assurer un soutien de la première zone solidifiée, évitant ainsi toute déformation lors du procédé de fabrication de l'objet. Une telle deuxième zone, même si elle est mécaniquement plus fragile que la première zone, présente une conductivité thermique plus proche de celle de la première zone que de la conductivité thermique de la poudre ou du mélange de poudres. De ce fait, l'écart entre les conductivités thermiques est suffisamment faible pour ne pas générer de défaut structurel dans l'objet.

Des aspects avantageux mais non obligatoires de l'invention sont spécifiés aux revendications 2 à 15.

L'invention sera mieux comprise et d'autres avantages de celle-ci apparaîtront plus clairement à la lecture de la description qui va suivre d'un procédé de fabrication conforme à un mode de réalisation de l'invention, donnée uniquement à titre d'exemple et faite en se référant aux dessins annexés dans lesquels :
- les figures 1 et 2 sont des illustrations schématiques, de côté, respectivement, d'une étape de mise en une couche et d'une étape de solidification à l'aide d'un laser de cette couche par un procédé de l'état de l'art, des défauts dans la paroi de l'objet fini étant représentés,
- les figures 3 à 6 sont des illustrations schématiques, à la même échelle, des étapes du procédé de fabrication conforme à l'invention, à savoir l'étalement de la couche et le frittage de cette première couche de poudre puis l'étalement d'une seconde couche de poudre,
- la figure 7 est une coupe selon le plan VII-VII de la figure 6, à la même échelle, d'un objet ainsi réalisé, avant une étape de finition, et
- la figure 8 est une vue, à plus grande échelle, de la zone cerclée VIII de la figure 2, montrant des défauts apparaissant dans une partie en contre dépouille, lors de la réalisation d'une paroi, selon un procédé de l'état de l'art.

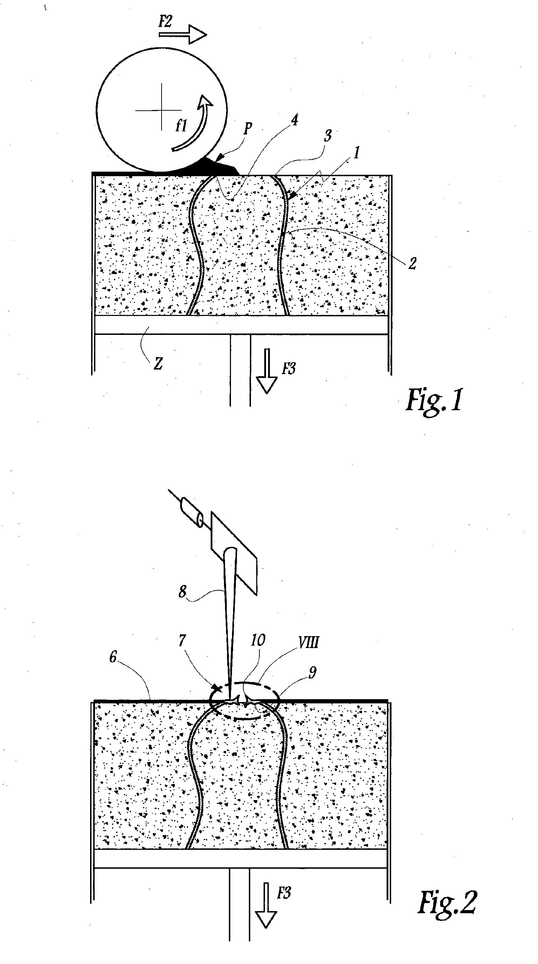

La figure 1 illustre schématiquement la réalisation d'un objet 1 réalisé à partir d'une poudre P ou d'un mélange de poudres, soit métallique soit céramique. Cet objet 1 a, dans l'exemple, une partie constitutive 2, autrement appelée paroi mince, c'est-à-dire une paroi d'une épaisseur inférieure à 1 mm. L'objet 1 est d'un volume relativement important par rapport à sa section transversale. Un tel objet 1 est creux, son volume intérieur représentant la quasi-totalité de son volume total. Il présente des zones 3 et 4 de sa paroi 2 en surplomb, c'est-à-dire en contre-dépouille.

Un cylindre 5, monté rotatif dans le sens de la flèche F1 et illustré aux figures 1, 4 et 6, assure l'étalement et/ou le compactage de la poudre P, avantageusement en plusieurs passages, selon la direction de la flèche F2.

En variante, d'autres organes d'étalement peuvent être prévus, par exemple une raclette située en aval du cylindre, selon la direction de la flèche F2.

En variante, la surface externe du cylindre 5 n'est pas lisse mais rainurée afin de permettre la prise de la poudre P, son étalement et son compactage, conformément à l'enseignement technique de EP-A-1 641 580.

On forme ainsi sur une zone de travail Z une première couche 6 de poudre P compactée, dont l'épaisseur varie généralement de 1 µm à 100 µm, préférentiellement de 15 µm à 40 µm. Cette zone de travail Z est formée par une plaque de base, mobile en translation selon la direction de la flèche F3. Cette plaque de base s'abaisse au fur et à mesure que l'on forme des couches de poudre P, afin que le cylindre 5 puisse étaler et compacter la poudre P.

Certaines zones de cette couche 6 de poudre P vont être frittées, c'est-à-dire solidifiées par l'énergie thermique apportée par un laser 8. Les zones 7 ainsi solidifiées sont constitutives des parois 2 de l'objet 1 fini.

La figure 2 illustre l'étape dite de traitement par laser ou frittage pour réaliser un objet 1 réalisé avec un procédé connu de l'art antérieur. L'action du laser 8, schématiquement illustré, sur cette couche 6 étalée et compactée génère l'apparition de défauts 9 et 10 sur l'objet 1.

Un premier type de défauts est constitué par des déformations 9 de la paroi mince 2. Ces déformations 9 proviennent de la libération de contraintes localisées, dues à l'élévation de la température de plusieurs centaines de degrés Celsius d'une région donnée de la paroi 2, sous l'action du laser 8.

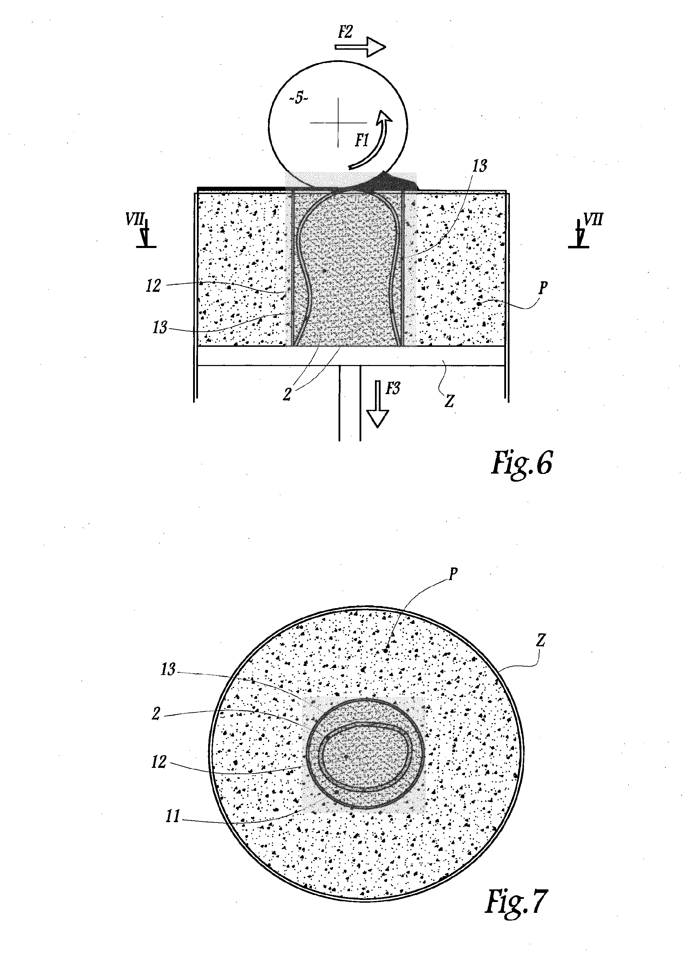

Un autre type de défauts, représenté à la figure 2, est illustré par des pointes 10 s'étendant vers l'intérieur et l'extérieur de l'objet 1. Ces pointes 10 apparaissent lorsqu'il y a une contre-dépouille, c'est-à-dire une zone où la paroi 2 est en surplomb par rapport à de la poudre P qui occupe une partie du volume de l'objet. Il existe une différence de conductivité thermique entre la couche de poudre P déjà traitée, c'est-à-dire solidifiée et qui forme une section d'une partie constitutive 2 de l'objet 1 et la poudre P à traiter, c'est-à-dire non solidifée. Cette dernière a une conductivité thermique inférieure à celle de la poudre frittée, c'est-à-dire au matériau solidifié, du fait de la présence de gaz par exemple de l'air ou de l'azote, entre les grains de la poudre. En d'autres termes, le matériau sous forme de poudre est plus réfractaire que le même matériau solidifié. Ainsi, l'action du laser 8 sur la poudre se fait également sentir au-delà de la zone sur laquelle il est dirigé, ce qui entraîne une solidification de la poudre P située dans l'environnement immédiat de la zone ciblée par le laser 8. Lorsque de la poudre P est située en dessous de la paroi 2 et au contact avec celle-ci, comme représenté à la figure 8 cela se traduit par des défauts tels que représentés aux figures 2 et 8, par exemple les pointes 10 situées aux extrémités libres de la paroi 2 et orientées vers l'intérieur et vers l'extérieur de l'objet. Comme illustré à la figure 8, les déformations 9 apparaissent entre la poudre P et la paroi 2, sur la face 20 de cette dernière orientée vers l'intérieur de l'objet. Lors du traitement par le laser 8, l'énergie thermique est transmise de la couche supérieure 60 de poudre P, par la paroi 2, jusqu'à la poudre située sous la paroi 2. Une certaine quantité de cette poudre P est alors solidifiée, de manière aléatoire et incontrôlée, ce qui génère les déformations 9. En d'autres termes, la face 20 intérieure de la paroi 2 n'est pas régulière. Lorsque l'extrémité libre de la paroi 2 mince est soumise à l'action du laser 8, pour solidifier une couche supplémentaire 60 de poudre P, il apparait, du fait de la faible épaisseur de la paroi 2, des déformations formant les pointes 10.

En présence de tels défauts et/ou déformations 9 et 10, le passage du cylindre 5 pour étaler une couche supplémentaire de poudre P sur la couche 6 déjà frittée est perturbé par l'absence de planéité et la présence d'un obstacle dans la couche de poudre solidifée. De ce fait, cette nouvelle couche est mal étalée et/ou compactée, voire pas compactée du tout. De plus, le rouleau peut être ralenti ou bloqué dans son mouvement de translation. Les pointes 10 peuvent en outre altérer la surface du cylindre 5. Par ailleurs, ces défauts et/ou déformations 9 et, 10 forment un point de faiblesse structurelle dans l'objet fini 1.

L'invention consiste, à partir de cette même poudre P ou mélange de poudres, à l'étaler à l'aide du même organe d'étalement 5, à la compacter, et à traiter à l'aide du laser 8 pour réaliser un objet 1 à paroi mince et/ou avec des contre-dépouilles sans défaut et/ou déformation.

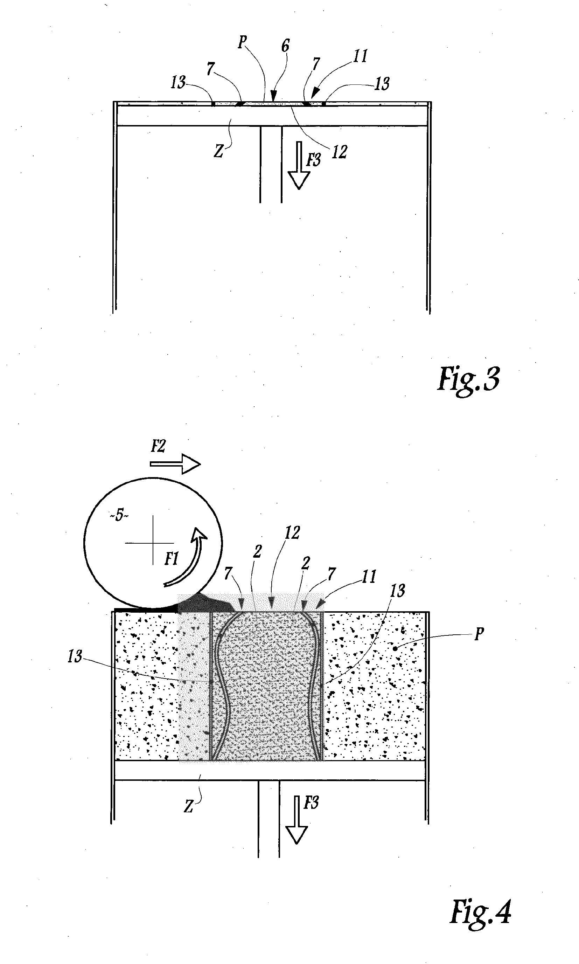

Pour cela, comme représenté à la figure 3, lors d'une première étape, une première couche 6 de poudre P est étalée, compactée puis traitée par le laser 8. Dans cette couche 6, on solidifie, comme précédemment, une première zone 7 qui correspond à la réalisation en section transversale, par couches successives, de la paroi 2 de l'objet 1 à réaliser, c'est-à-dire d'une section d'une partie constitutive de l'objet.

Dans une deuxième étape, on solidifie à l'aide du laser 8 au moins une seconde zone de la poudre P, non constitutive de l'objet fini 1, c'est-à-dire que cette seconde zone ne fait pas partie de l'objet 1. Dans l'exemple, deux telles secondes zones, référencées 11 et 12, sont prévues. Ces zones 11 et 12 sont mitoyennes au contact ou, en variante, mitoyennes sans contact, avec dans ce cas, un écart de l'ordre du dixième de millimètre entre les zones 11 et 12 et la zone 7. Ces zones 11 et 12 sont de dimensions sensiblement plus importantes que les dimensions de la zone 7. Les zones 11 et 12 sont, en l'espèce, formées dans la poudre P de part et d'autre de la zone 7. En d'autres termes, les zones 11 et 12 sont situées de chaque coté d'une section de la paroi 2 à réaliser. Lors de cette deuxième étape, les paramètres de fonctionnement du laser 8 sont différents. Ils sont adaptés pour que la solidification de la poudre P dans les zones 11 et 12 ne soit pas complète. En d'autres termes, il s'agit de réaliser les zones 11 et 12 dans lesquelles la poudre P est solidifiée, mais avec une densité moindre et/ou une porosité supérieure à la zone 7 où la poudre P solidifiée forme la paroi 2. Ainsi, ces zones 11 et 12 sont structurellement plus fragiles que la zone 7 destinée à former les parois de l'objet. Néanmoins, elles sont suffisamment résistantes, de par le traitement à l'aide du laser 8, autrement dit par frittage, pour former un support ou un renfort aux parois 2 réalisées lors de la mise en oeuvre du procédé. Même si les zones 11 et 12 sont plus fragiles que les zones 7, elles sont plus stables que la poudre P non traitée par le laser 8.

Pour obtenir les zones 11 et 12, l'une des solutions réside dans le fait que l'énergie thermique apportée à la poudre P dans les secondes zones 11 et 12 est inférieure à l'énergie apportée à la poudre P pour solidifier la première zone 7.

Cette différence d'énergie thermique est obtenue, par exemple, en utilisant une puissance de laser inférieure, et/ou en utilisant une même puissance de laser mais avec une vitesse de balayage supérieure. Avantageusement, on utilise le laser 8 avec une puissance inférieure et une vitesse de défilement supérieure.

Dans d'autres modes de réalisation non illustrés, la variation d'énergie thermique est obtenue par d'autres moyens connus en soi, par exemple en modulant les trajectoires du faisceau du laser.

A titre d'exemple pour des poudres P métalliques, la différence d'énergie utilisée lors du frittage des zones 7 et des zones 11 et 12 est comprise entre 10 et 20 % de l'énergie thermique du faisceau laser nécessaire pour fritter les zones 7.

Dans un mode de réalisation non représenté, on utilise deux lasers, soit différents, soit identiques mais réglés différemment, de manière à réaliser simultanément les zones 7 et les zones 11 et 12. En d'autres termes, les étapes de frittage des zones 7, 11 et12 ne sont pas successives mais simultanées. Une telle solution permet un gain de temps dans la réalisation de l'objet.

Dans tous les cas, le ou les lasers utilisés sont avantageusement à longueur d'onde fixe. En d'autres termes, on utilise une seule longueur d'onde pour le frittage des zones 7, 11 et 12 de la couche 6 de poudre P.

Dans un mode de réalisation préféré, qui simplifie la mise en oeuvre du procédé, la poudre ou le mélange de poudres, qui constitue la couche 6, est homogène sur la totalité de la couche.

Dans une autre variante non illustrée, les poudres ou mélanges de poudres, constitutifs des zones 7 et des zones 11 et 12 ne sont pas les mêmes. Dans ce cas, la nature même de la poudre formant les zones 11 et 12 participe à leur faiblesse structurelle.

Les figures 4 à 6 illustrent un mode de réalisation comprenant une étape supplémentaire de frittage de la poudre P dans une zone 13 non constitutive de l'objet 1, différente et distincte des zones 11 et 12. Cette zone 13, une fois frittée, délimite une paroi entourant les autres zones 11, 12 et 7. En pratique, le frittage de la zone 13 est réalisé selon les diverses possibilités listées plus haut en ce qui concerne les zones 11 et 12.

En d'autres termes, on entoure par une paroi les zones frittées correspondant à l'objet 1. Cette paroi 13 est frittée dans des conditions, différentes ou non de celles appliquées lors du frittage des zones 7, 11 et 12. En l'espèce, les conditions sont adaptées pour que la résistance mécanique de la paroi 13 soit intermédiaire entre celle de la paroi 2 et des zones 11 et 12. En variante, la résistance mécanique de la paroi 13 est identique à celle de la paroi 2. De cette manière, la paroi 13 protège et renforce le soutien réalisé par les zones 11 et 12 tout en étant aisée à détruire lors de la finition de l'objet 1. La paroi 13 est particulièrement utile lorsque l'on réalise un objet de grandes dimensions.

Cette troisième zone 13 forme ainsi une paroi d'arrêt. Pour cela, elle définit un objet de forme géométrique simple, notamment de forme cylindrique, à base circulaire ou non, en fonction de la géométrie de l'objet 1.

Sur les figures 4 à 7, la différence des traits de remplissage entre les zones 11 et 12 situées radialement à l'intérieur de la paroi 13 et la zone située à l'extérieur de cette paroi représente la différence d'état de la poudre, entre les zones 11 et 12, où elle est traitée par le laser 8, et l'extérieur, où elle n'est pas solidifiée.

Comme illustré à la figure 4, l'étalement d'une couche supplémentaire de poudre P sur ces couches déjà frittées n'est pas altéré par la présence des défauts.

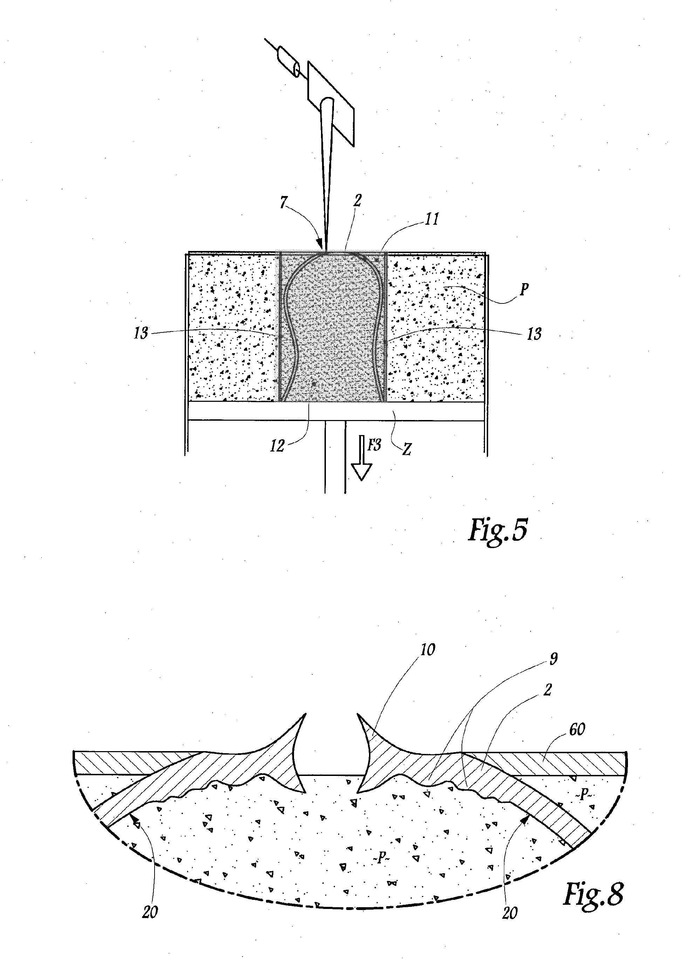

Comme illustrée à la figure 5, la solidification à l'aide du laser 8 n'induit ni défaut ni déformation des parois 2 puisque celles-ci sont fermement maintenues par les zones 11 et 12 et 13 de moindre résistance qui vont absorber, de manière relativement similaire, la chaleur émise par radiation lors du traitement de la première zone. Comme illustré à la figure 5, lors d'un dernier passage du laser 8, on fritte la poudre P pour finir la paroi 2, en fermant le volume intérieur de l'objet 1.

Ainsi, lorsqu'on observe un objet 1 vu en coupe comme à la figure 7, celui-ci présente une série de zones concentriques. La première zone, en partant du centre, est une zone 12 de moindre résistance qui occupe le volume intérieur de l'objet. Une autre zone de faible épaisseur délimite les parois 2 de l'objet 1. Une autre zone 13, également de faible épaisseur, entoure l'objet 1. Une zone 11 de moindre résistance et similaire à la zone 12 est située entre les parois 2 et 13.

Lorsque l'objet 1 est fini, il suffit d'effectuer l'enlèvement des zones 11 et 12 et de la paroi 13 de moindre résistance par des techniques connues en soi, par exemple par micro-sablage, par microbillage, par brossage ou à l'aide d'un jet d'eau. Ces zones 11, 12 et 13, par définition, sont dégradées et altérées par le micro-sablage ou le microbillage bien avant que celui-ci n'atteigne ou dégrade les parois 2 de l'objet 1.

On réalise par cette méthode des objets à paroi mince et /ou de forme géométrique complexe présentant notamment de nombreux volumes intérieurs. Ce procédé est aisément applicable à différents types de poudres, qu'il s'agisse de poudres métalliques ou céramiques et quelles que soient les formes de l'objet.

Le compactage de chaque couche de poudre permet d'obtenir des zones frittés 7, 11, 12 et 13 suffisamment résistantes et ayant une conductivité thermique maîtrisée. Ainsi, les défauts de fabrication sont évités.

Ce procédé peut être utilisé avec différentes installations existantes de solidification de poudre par traitement de couches minces de poudre à l'aide d'un laser, pour autant que l'on puisse régler les valeurs de l'énergie thermique fournie par le laser.

L'utilisation de deux poudres de natures différentes, une pour faire les zones 11, 12, 13 dites de renfort et une pour faire l'objet 1 permet, lorsque l'objet est réalisé en un matériau rare et/ou onéreux, d'économiser ce dernier.

Un tel procédé permet de réaliser des objets fins et/ou de forme complexe.

## Revendications

1. Procédé de fabrication d'un objet (1) par solidification d'une poudre (P) ou d'un mélange de poudres à l'aide d'au moins un laser (8), comprenant au moins des étapes consistant à :
- a) déposer à l'aide d'un organe d'étalement (5) une couche (6) de poudre (P) ou de mélange de poudres sur une zone (Z) de travail,
- b) compacter à l'aide d'un organe de compactage (5) cette couche (6),
- c) solidifier à l'aide d'un laser (8) une première zone (7) de la couche (6) compactée à l'étape b), cette zone correspondant à une section d'une paroi (2) constitutive de l'objet (1) fini,
- d) solidifier au moins une deuxième zone (11, 12) de la couche (6) compactée à l'étape b), cette deuxième zone (11, 12) étant au contact de la première zone (7) solidifiée, avec des conditions de solidification adaptées pour que cette deuxième zone (11, 12) solidifiée présente une résistance mécanique inférieure à la résistance mécanique de la première zone (7) solidifiée,
- e) répéter les étapes a) à d) jusqu'à obtention de l'objet (1),
- f) après l'étape e) et lorsque l'objet (1) est fini, réaliser l'enlèvement des deuxièmes zones (11, 12) solidifiées par rapport aux premières zones (7) solidifiées.

2. Procédé selon la revendication 1, **caractérisé en ce que** la poudre (P) ou le mélange de poudres est métallique ou minéral.

3. Procédé selon la revendication 1 ou 2, **caractérisé en ce que** l'étape d) est réalisée après l'étape c).

4. Procédé selon l'une quelconque des revendications précédentes, **caractérisé en ce que** lors de l'étape d), on amène une énergie thermique moindre au niveau de la deuxième zone (11, 12) en utilisant une énergie thermique fournie par le laser (8) inférieure à celle fournie pour solidifier la première zone (7).

5. Procédé selon la revendication 4, **caractérisé en ce que**, lors de l'étape d), le laser (8) est utilisé avec une puissance inférieure à celle de l'utilisation du laser lors de l'étape c).

6. Procédé selon la revendication 4 ou 5, **caractérisé en ce que**, lors de l'étape d), le laser (8) est utilisé avec une vitesse de défilement supérieure à celle de l'utilisation du laser lors de l'étape c).

7. Procédé selon la revendication 1 ou 2, **caractérisé en ce que** l'étape d) est réalisée simultanément à l'étape c), en utilisant un laser différent du laser (8) utilisé à l'étape c).

8. Procédé selon l'une quelconque des revendications précédentes, **caractérisé en ce que** la couche (6) est constituée d'une poudre ou d'un mélange de poudres homogène sur la totalité de la couche.

9. Procédé selon l'une quelconque des revendications 1 à 7, **caractérisé en ce que** la seconde zone (11, 12) est formée d'une poudre (P) ou d'un mélange de poudres qui présente une nature différente de la poudre (P) ou du mélange de poudres dans lequel est formée la première zone (7).

10. Procédé selon l'une quelconque des revendications précédentes, **caractérisé en ce que**, lors des étapes c) et d), le ou les lasers (8) sont utilisés avec une longueur d'onde unique pour solidifier les premières (7) et deuxième (11, 12) zones.

11. Procédé selon l'une quelconque des revendications précédentes, **caractérisé en ce qu'**il comprend une étape supplémentaire consistant à, lors d'une étape g), après l'étape c), solidifier une troisième zone (13) de la couche compactée à l'étape b), cette troisième zone (13) étant solidifiée avec des conditions de solidification adaptées pour que sa résistance mécanique soit intermédiaire entre celles des première (7) et deuxième (11, 12) zones, **en ce que**, lors de l'étape e), l'étape g) est également répétée, et **en ce que**, lors de l'étape f), les troisièmes zones (13) sont également enlevées.

12. Procédé selon la revendication 11, **caractérisé en ce que**, lors de l'étape g), on amène une énergie thermique intermédiaire au niveau de la troisième zone (13), en utilisant une énergie thermique fournie par le laser (8), qui est inférieure à celle fournie pour solidifier la première zone (7) et qui est supérieure à celle fournie pour solidifier la deuxième zone (11, 12).

13. Procédé selon la revendication 11, **caractérisé en ce que** l'étape g) est réalisée simultanément à l'étape c) en utilisant un laser différent du laser (8) utilisé à l'étape c).

14. Procédé selon l'une des revendications 11 à 13, **caractérisé en ce que** la troisième zone (13) est formée d'une poudre (P) ou d'un mélange de poudres, qui présente une nature différente de la poudre (P) ou du mélange de poudres dans lequel est formée la première zone (7).

15. Procédé selon l'une quelconque des revendications précédentes, **caractérisé en ce que**, lors de l'étape f), les deuxièmes zones (11, 12) et, le cas échéant, les troisièmes zones (13) sont enlevées de la première zone (7) par micro-sablage, par microbillage, par brossage ou à l'aide d'un jet d'eau.

## Patentansprüche

1. Verfahren zur Herstellung eines Gegenstands (1) durch Verfestigung eines Pulvers (P) oder einer Mischung aus Pulvern mittels mindestens eines Lasers (8), mindestens folgende Schritte umfassend:
- a) Aufbringen einer Schicht (6) aus Pulver (P) oder einer Mischung von Pulvern mittels eines Verteilungselements (5) auf eine Arbeitszone (Z),
- b) Verdichten dieser Schicht (6) mittels eines Verdichtungselements (5),
- c) Verfestigen einer ersten Zone (7) der im Schritt b) verdichteten Schicht (6) mittels eines Lasers (8), wobei diese Zone einem Abschnitt einer Wand (2) als Bestandteil des fertigen Gegenstands (1) entspricht,
- d) Verfestigen mindestens einer zweiten Zone (11, 12) der im Schritt b) verdichteten Schicht (6), wobei diese zweite Zone (11, 12) in Kontakt mit der ersten verfestigten Zone (7) ist, wobei Verfestigungsbedingungen derart angepasst sind, dass diese zweite verfestigte Zone (11, 12) einen mechanischen Widerstand aufweist, der kleiner ist als der mechanische Widerstand der ersten verfestigten Zone (7),
- e) Wiederholen der Schritte a) bis d) bis der Gegenstand (1) erhalten wird,
- f) nach dem Schritt e) und wenn der Gegenstand (1) fertig ist, Durchführen der Entfernung der zweiten verfestigten Zonen (11, 12) in Bezug auf die ersten verfestigten Zonen (7).

2. Verfahren nach Anspruch 1, **dadurch gekennzeichnet, dass** das Pulver (P) oder die Mischung an Pulvern metallisch oder mineralisch ist.

3. Verfahren nach Anspruch 1 oder 2, **dadurch gekennzeichnet, dass** der Schritt d) nach dem Schritt c) realisiert wird.

4. Verfahren nach einem beliebigen der vorhergehenden Ansprüche,
**dadurch gekennzeichnet, dass** bei Schritt d) eine geringere Wärmeenergie der zweiten Zone (11, 12) zugeführt wird, indem eine von dem Laser (8) gelieferte Wärmeenergie verwendet wird, die geringer ist als diejenige, die für die Verfestigung der ersten Zone (7) geliefert wird.

5. Verfahren nach Anspruch 4, **dadurch gekennzeichnet, dass** bei Schritt d) der Laser (8) mit einer geringeren Leistung verwendet wird als diejenige der Verwendung des Lasers bei Schritt c).

6. Verfahren nach Anspruch 4 oder 5, **dadurch gekennzeichnet, dass** bei dem Schritt d) der Laser (8) mit einer Laufgeschwindigkeit verwendet wird, die größer ist als die bei der Verwendung des Lasers bei Schritt c).

7. Verfahren nach Anspruch 1 oder 2, **dadurch gekennzeichnet, dass** der Schritt d) gleichzeitig mit dem Schritt c) realisiert wird, indem ein zu dem bei dem Schritt c) verwendeten Laser (8) unterschiedlicher Laser verwendet wird.

8. Verfahren nach einem beliebigen der vorhergehenden Ansprüche,
**dadurch gekennzeichnet, dass** die Schicht (6) aus einem Pulver oder einer Pulvermischung besteht, das bzw. die homogen über die Gesamtheit der Schicht ist.

9. Verfahren nach einem beliebigen der Ansprüche 1 bis 7, **dadurch gekennzeichnet, dass** die zweite Zone (11, 12) aus einem Pulver (P) oder einer Pulvermischung gebildet wird, das bzw. die in ihrer Beschaffenheit unterschiedlich zu dem Pulver (P) oder der Pulvermischung ist, aus dem bzw. der die erste Zone (7) gebildet wird.

10. Verfahren nach einem beliebigen der vorhergehenden Ansprüche,
**dadurch gekennzeichnet, dass** bei den Schritten c) und d) der oder die Laser (8) mit einer einzigen Wellenlänge verwendet werden, um die ersten (7) und zweiten (11, 12) Zonen zu verfestigen.

11. Verfahren nach einem beliebigen der vorhergehenden Ansprüche,
**dadurch gekennzeichnet, dass** es einen zusätzlichen Schritt umfasst, der darin besteht, nach dem Schritt c) bei einem Schritt g) eine dritte Zone (13) der in Schritt b) verdichteten Schicht zu verfestigen, wobei diese dritte Zone (13) mit Verfestigungsbedingungen verfestigt wird, die derart angepasst sind, dass ihr mechanischer Widerstand zwischen denen der ersten (7) und zweiten (11, 12) Zonen liegt, dass bei dem Schritt e) der Schritt g) gleichfalls wiederholt wird und dass bei dem Schritt f) die dritten Zonen (13) gleichfalls entfernt werden.

12. Verfahren nach Anspruch 11, **dadurch gekennzeichnet, dass** bei dem Schritt g) der dritten Zone (13) eine dazwischenliegende Wärmeenergie zugeführt wird, indem eine von dem Laser (8) gelieferte Wärmeenergie verwendet wird, die geringer als diejenige ist, die zum Verfestigen der ersten Zone (7) geliefert wird und die größer als diejenige ist, die zur Verfestigung der zweiten Zone (11, 12) geliefert wird.

13. Verfahren nach Anspruch 11, **dadurch gekennzeichnet, dass** der Schritt g) gleichzeitig mit dem Schritt c) durchgeführt wird, indem ein zu dem bei Schritt c) verwendeten Laser (8) unterschiedlicher Laser verwendet wird.

14. Verfahren nach einem beliebigen der Ansprüche 11 bis 13, **dadurch gekennzeichnet, dass** die dritte Zone (13) aus einem Pulver (P) oder einer Pulvermischung gebildet wird, das bzw. die in seiner bzw. ihrer Beschaffenheit unterschiedlich zu dem Pulver (P) oder der Pulvermischung ist, aus dem bzw. der die erste Zone (7) gebildet wird.

15. Verfahren nach einem beliebigen der vorhergehenden Ansprüche,
**dadurch gekennzeichnet, dass** bei dem Schritt f) die zweiten Zonen (11, 12) und im gegebenen Fall die dritten Zonen (13) von der ersten Zone (7) durch Mikrosandstrahlen, durch Mikrokugelstrahlen, durch Bürsten oder mittels eines Wasserstrahls entfernt werden.

## Claims

1. Method for manufacturing an object (1) by solidifying a powder (P) or a powder mixture using at least one laser (8), comprising at least steps consisting of:
a) depositing, using a spreading member (5), a layer (6) of powder (P) or powder mixture on a work area (Z),
b) compacting, using a compacting member (5), this layer (6),
c) solidifying, using a laser (8), a first area (7) of the layer compacted in step b), said area corresponding to a section of a wall (2) constituting the finished object (1),
d) solidifying at least one second area (11, 12) of the layer (6) compacted in step b), said second area (11, 12) being in contact with the first solidified area (7), with suitable solidification conditions such that the second solidified area (11, 12) has a lower mechanical resistance than the mechanical resistance of the first solidified area (7),
e) repeating steps a) to d) until the object (1) is obtained,
f) after step e) and when the object (1) is finished, removing the second solidified areas (11, 12) with respect to the first solidified areas (7).

2. Method according to claim 1, **characterised in that** the powder (P) or powder mixture is metallic or mineral.

3. Method according to claim 1 or 2, **characterised in that** step d) is performed after step c).

4. Method according to any of the above claims, **characterised in that** during step d), a lower thermal energy is supplied to the second area (11, 12) using a lower thermal energy supplied by the laser (8) than that supplied for solidifying the first area (7).

5. Method according to claim 4, **characterised in that**, during step d), the laser (8) is used with a lower power than that of the use of the laser during step c).

6. Method according to claim 4 or 5, **characterised in that**, during step d), the laser (8) is used with a higher scanning speed than that of the use of the laser during step c).

7. Method according to claim 1 or 2, **characterised in that** step d) is performed simultaneously with step c), using a different laser to the laser (8) used in step c).

8. Method according to any of the above claims, **characterised in that** the layer (6) consists of a homogeneous powder or powder mixture on the entire layer.

9. Method according to any of claims 1 to 7, **characterised in that** the second area (11, 12) is formed from a powder (P) or a powder mixture of a different type to the powder (P) or powder mixture wherein the first area (7) is formed.

10. Method according to any of the above claims, **characterised in that**, during steps c) and d), the laser(s) (8) is/are used with a single wavelength to solidify the first (7) and second (11, 12) areas.

11. Method according to any of the above claims, **characterised in that** it comprises a further step consisting of, during a step g), after step c), solidifying a third area (13) of the layer compacted in step b), this third area (13) being solidified with suitable solidification conditions such that the mechanical resistance thereof is intermediate between those of the first (7) and second (11, 12) areas, **in that**, during step e), step g) is also repeated, and **in that**, during step f), the third areas (13) are also removed.

12. Method according to claim 11, **characterised in that**, during step g), an intermediate thermal energy is supplied to the third area (13), using a thermal energy supplied by the laser (8), which is less than that supplied to solidify the first area (7) which is greater than that supplied to solidify the second area (11, 12).

13. Method according to claim 11, **characterised in that** step g) is performed simultaneously with step c) using a different laser to the laser (8) used in step c).

14. Method according to any of claims 11 to 13, **characterised in that** the third area (13) is formed from a powder (P) or powder mixture of a different type to the powder (P) or powder mixture wherein the first area (7) is formed.

15. Method according to any of the above claims, **characterised in that**, during step f), the second areas (11, 12) and, if applicable, the third areas (13) are removed from the first area (7) by means of micro-sanding, micro-bead blasting, brushing or using a water jet.
